(19) Europäisches Patentamt
European Patent Office
Office européen des brevets

(11) **EP 1 680 648 B1**

(12) **FASCICULE DE BREVET EUROPEEN**

(45) Date de publication et mention
de la délivrance du brevet:
**25.07.2012   Bulletin 2012/30**

(51) Int Cl.:
*G01C 19/00* (2006.01)     *B64G 1/28* (2006.01)
*G05D 1/08* (2006.01)

(21) Numéro de dépôt: **04805353.2**

(22) Date de dépôt: **29.10.2004**

(86) Numéro de dépôt international:
**PCT/FR2004/002800**

(87) Numéro de publication internationale:
**WO 2005/045366 (19.05.2005 Gazette 2005/20)**

(54) **CONTROLE D'ATTITUDE DE SATELLITES EN PARTICULIER AGILES A NOMBRE REDUIT DE GYRODYNES**

VERFAHREN ZUR STEUERUNG DER LAGE VON SATELLITEN, INSBESONDERE VON AGILEN SATELLITEN MIT EINER VERRINGERTEN ANZAHL VON STEUERMOMENTKREISEL

METHOD OF CONTROLLING THE ATTITUDE OF SATELLITES, PARTICULARLY AGILE SATELLITES WITH A REDUCED NUMBER OF CONTROL MOMENT GYROSCOPES

(84) Etats contractants désignés:
**DE ES GB IT**

(30) Priorité:  **04.11.2003   FR 0312914**

(43) Date de publication de la demande:
**19.07.2006   Bulletin 2006/29**

(73) Titulaire: **EADS ASTRIUM SAS**
**31402 Toulouse Cedex 4 (FR)**

(72) Inventeurs:
• **DEFENDINI, Ange**
**F-31380 Montjoire (FR)**
• **GHEZAL, Mehdi**
**F-31500 Toulouse (FR)**

(74) Mandataire: **Bérogin, Francis et al**
**Cabinet Plasseraud**
**52 rue de la Victoire**
**75440 Paris Cedex 09 (FR)**

(56) Documents cités:
**US-B1- 6 241 194**

EP 1 680 648 B1

**Description**

L'invention concerne le contrôle d'attitude de satellites par échanges de moments cinétiques fournis par une pluralité d'actionneurs inertiels à organes rotatifs montés sur la plate forme des satellites.

L'invention concerne plus particulièrement un procédé et un système de contrôle d'attitude de satellites dits agiles, c'est-à-dire capables de manoeuvres d'attitude très rapides, équipés d'un système de contrôle d'attitude comprenant au moins deux gyrodynes.

On sait qu'un gyrodyne, également appelé actionneur gyroscopique et souvent désigné par le sigle CMG (Control Moment Gyro), se différencie des roues de réaction, couramment utilisées pour commander l'attitude d'un satellite par échange de moments cinétiques, en ce que le gyrodyne comporte une toupie entraînée (par un moteur) en rotation autour d'un axe de rotation lui-même fixé sur un support, dénommé cardan, orientable (par au moins un autre moteur) autour d'au moins un axe cardan fixe par rapport à la plate-forme du satellite, l'axe de rotation de la toupie évoluant perpendiculairement à l'axe cardan, alors qu'une roue de réaction est entraînée (par un moteur) en rotation à vitesse variable autour d'un axe de rotation fixe par rapport à la plate-forme du satellite.

Les procédés et systèmes de contrôle d'attitude de satellites agiles de l'état de la technique comprennent généralement une grappe de trois ou quatre gyrodynes délivrant de forts couples suivant les trois axes du satellite.

Un procédé également bien connu consiste à utiliser deux gyrodynes tête bêche (leurs moments cinétiques étant égaux en module et opposés en direction) pour réaliser des couples dans une direction, en l'occurrence la bissectrice desdits moments cinétiques.

Par ailleurs, les brevets US-5,681,012 et US-6,360,996 décrivent un procédé utilisant deux gyrodynes pour réaliser des couples suivant deux axes distincts.

Le document US6241194 décrit un procédé avec toutes les caractéristiques du préambule de la revendication 1.

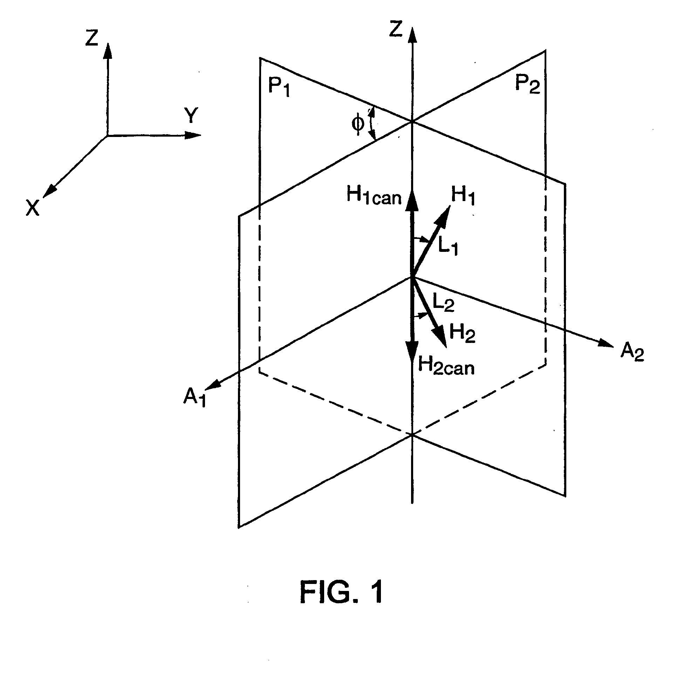

A cet effet, et en référence à la figure 1, qui représente schématiquement la disposition des deux gyrodynes par l'orientation de leurs axes cardan et vecteurs moments cinétiques développés par rapport au trièdre orthogonal de référence (X, Y, Z), les axes cardan A1 et A2 des deux gyrodynes sont montés dans le plan défini par les deux axes X et Y du trièdre, ce plan (X, Y) étant orthogonal à l'axe Z, qui est par exemple l'axe de pointage d'un instrument embarqué sur le satellite et qu'il s'agit de basculer. L'angle φ entre les deux axes cardan A1 et A2, doit impérativement être non nul pour obtenir l'effet recherché. Selon les deux brevets US précités, l'angle φ préféré est de 120°. Les moments cinétiques $\vec{H}_1$, et $\vec{H}_2$ des deux gyrodynes sont ainsi contraints d'évoluer respectivement dans les plans P1 et P2, orthogonaux respectivement à A1 et A2, et formant entre eux le

même angle φ. En position canonique, les moments cinétiques $\vec{H}_{1can}$ et $\vec{H}_{2can}$ des deux gyrodynes sont avantageusement alignés dans une configuration tête bêche selon l'axe Z, de sorte que le moment cinétique total de la paire de gyrodynes est nul. Cet agencement est appelé « en paire de ciseaux biaisés » (« skewed scissor pair »).

Partant de cette configuration canonique, les moments cinétiques $\vec{H}_1$, et $\vec{H}_2$ des gyrodynes sont pivotés chacun autour de leur axe cardan A1 ou A2 respectif, de telle façon que le couple résultant ait nominalement une composante nulle suivant l'axe Z, sans quoi au moins un troisième actionneur, agissant suivant l'axe Z, devrait compenser cette composante, qui pourrait être élevée du fait que les couples délivrés par les gyrodynes sont très importants.

Pour que cette composante suivant l'axe Z soit nulle, il est nécessaire de contraindre l'évolution temporelle des angles de rotation L1 et L2 donnés respectivement aux deux gyrodynes, autour de leur axe cardan respectif A1 et A2, à partir de la position canonique.

Plus précisément, selon US-5, 681,012, il faut que:

$$\frac{dL1}{dt} \cdot \sin(L1) = \frac{dL2}{dt} \cdot \sin(L2)$$

c'est-à-dire, en intégrant :

$$\cos(L1) = \cos(L2) + \text{constante,}$$

la constante étant nulle car L1 = L2 = 0 à l'instant t = 0.

En conséquence, pour que le procédé de contrôle selon US-5,681,012 puisse être mis en oeuvre, il est indispensable que les angles de rotation des gyrodynes, à partir de leur position canonique, soient égaux en valeur absolue, leur signe pouvant être identiques (L1 = L2) ou opposés (L1 = -L2). Le biais des axes cardans A1 et A2 d'un angle φ non nul assure alors la réalisation de couples dans deux directions U1 et U2 différentes du plan (X, Y), selon que les signes desdits angles de rotation sont les mêmes ou qu'ils sont opposés, comme décrit de manière détaillée dans US-5,681,012, auquel on se reportera avantageusement pour davantage de précisions à ce sujet.

Cependant, il est important de noter que, par principe, la réalisation de ces deux couples ne peut se faire, selon ce procédé connu, que de façon séquentielle, et ne peut pas être simultanée, car on ne peut avoir en même temps L1 = L2 et L1 = -L2.

La première conséquence de ce système et procédé connus est la non contrôlabilité selon les trois axes du système aux petits angles. D'autres actionneurs doivent être utilisés pour pallier cet inconvénient. De plus, pour basculer l'axe Z autour d'un axe quelconque U du plan (X, Y), il convient de décomposer la rotation R (U) autour de l'axe U en un produit de deux rotations, dont la première s'effectue autour de l'axe U1 (R (U1)), et la seconde selon l'axe U2 (R (U2)).

Ainsi, pour réaliser la rotation R(U), le satellite sera d'abord basculé suivant U1 pour réaliser la rotation R (U1), puis suivant U2 pour réaliser la rotation R (U2), avec une phase d'arrêt entre les deux rotations.

Les limitations de ce procédé sont donc une non contrôlabilité aux petits angles, ainsi qu'une sous-optimalité importante de la réalisation de manoeuvres aux grands angles.

Le brevet US-6,360,996 porte sur des perfectionnements apportés au procédé selon US-5,681,012. Le principe de base, à savoir la configuration en paire de ciseaux biaisés, est conservé. Mais en outre, des déviations par rapport aux contraintes

$$\frac{dL1}{dt} \cdot \sin (L1) = \frac{dL2}{dt} \cdot \sin (L2)$$

c'est-à-dire L1 = L2 ou L1 = -L2, sont acceptées dans US 6360996, les couples perturbateurs induits suivant l'axe Z étant alors compensés par une variation de la vitesse des toupies des gyrodynes. De ce fait, des couplages complexes apparaissent entre le contrôle selon les axes (X, Y) et le contrôle selon l'axe Z, en particulier en mode manoeuvre.

Ces couplages sont difficilement gérables, et ils engendrent des risques de saturation des actionneurs suivant l'axe Z. La gestion de ces saturations est une caractéristique centrale du procédé, comme cela résulte de la description qui en est faite dans US-6,360,996, et ce d'autant plus que le procédé de contrôle décrit dans ce brevet n'utilise que des concepts de guidage en basculement très classiques, par détermination de trajectoires et réalisation de couples à appliquer sur le satellite pour réaliser les trajectoires déterminées.

Pour pallier les inconvénients pré-cités de l'état de la technique (utilisation de deux gyrodynes pour créer des couples suivant un axe, ou suivant deux axes mais avec de fortes contraintes de réalisation), l'invention propose un système de contrôle d'attitude de satellite qui comprend une paire de gyrodynes et au moins un troisième actionneur dans une configuration différente de celles connues de l'état de la technique, en particulier des brevets US-5,681,012 et US-6,360,996, afin de réaliser le contrôle d'attitude selon trois axes du satellite, ainsi que des basculements rapides, avec des lois de guidage et de contrôle très simples à mettre en oeuvre, et des couplages entre axes maîtrisés.

A cet effet, le procédé selon l'invention, pour contrôler l'attitude d'un satellite équipé d'un système de contrôle d'attitude dans un trièdre de référence (X, Y, Z) de positionnement du satellite, et comprenant au moins trois actionneurs dits principaux, dont deux sont des gyrodynes ayant chacun une toupie entraînée en rotation autour d'un axe de rotation fixé sur un cardan orientable autour d'un axe cardan perpendiculaire à l'axe de rotation de la toupie correspondante, et fixe par rapport au satellite, le procédé comportant les étapes suivantes:

- on fixe les axes cardan des deux gyrodynes de sorte que ces axes cardans sont parallèles l'un à l'autre et à l'axe (Z), les vecteurs moments cinétiques ($\vec{H}_1$, $\vec{H}_2$) des gyrodynes évoluant donc dans le plan (X, Y), et formant entre eux un angle ($\alpha$) qui par définition correspond à un biais $\varepsilon$ = 180 - a entre les vecteurs moments cinétiques ($\vec{H}_1$, $\vec{H}_2$) lorsque $\alpha$ est différent de 0 et 180 degrés;

- en plus des deux gyrodynes, on utilise en complément au moins un troisième actionneur dit principal, délivrant des couples dans les deux sens dans au moins une direction située hors du plan (X, Y), de sorte que ce troisième actionneur principal est dit actionneur principal suivant l'axe (Z);

- on imprime un biais ($\varepsilon$) non nul entre les vecteurs moments cinétiques ($\vec{H}_1$, $\vec{H}_2$) des gyrodynes, ledit biais ($\varepsilon$) étant choisi de préférence assez petit pour ne pas créer un moment cinétique interne trop important à bord du satellite, et assez grand pour assurer la contrôlabilité du système de contrôle d'attitude suivant les trois axes (X, Y, Z) sans avoir nécessairement à modifier la vitesse de rotation de la toupie de l'un au moins des gyrodynes ;

- on estime, à partir de mesures fournies par des senseurs utilisés à bord du satellite, les variables cinématiques et dynamiques, qui sont nécessaires pour le contrôle d'attitude du satellite, comme par exemple les angles d'attitude et vitesses angulaires du satellite suivant les trois axes,

- on calcule des variables de consigne, destinées à permettre de réaliser des objectifs assignés au système de contrôle d'attitude du satellite, comme par exemple des basculements et pointages selon l'un au moins des trois axes du trièdre (X, Y, Z);

- à partir d'écarts entre lesdites variables estimées et lesdites variables de consigne, on calcule, puis on envoie aux actionneurs principaux des ordres de commandes destinés à contrôler l'évolution desdits écarts dans le temps, lesdits ordres de commande transmis aux gyrodynes comprenant au moins des ordres destinés à faire varier l'orientation de leurs axes cardan, comme par exemple des consignes de position angulaire des cardans devant être réalisées par un asservissement local en position, ou des consignes en courant électrique devant être injecté dans des moteurs d'orientation des axes cardan, caractérisé en ce que, lors d'une phase d'initialisation du système de contrôle d'attitude, l'angle ($\alpha$) entre les vecteurs moments cinétiques ($H_1$, $H_2$) des deux gyrodynes (3, 4) est amené à une valeur sensiblement différente de 180 degrés, en utilisant au moins un actionneur secondaire, embarqué sur le satellite en vue de modifier sensiblement et de façon cumulative le moment cinétique dudit satellite dans au moins une direction du plan (X, Y), et/ou éventuellement l'actionneur principal suivant l'axe Z dans le cas où celui-ci permet d'engendrer une composante de moment cinétique dans le plan (X, Y).

Ce procédé utilisant une paire de gyrodynes dans cette configuration particulière où les moments cinétiques évoluent dans le plan (X, Y) avec un angle $\alpha$ non nul, autour d'une position non pas alignée tête bêche mais avec un biais $\varepsilon = 180 - a$ non nul, ainsi qu'au moins un troisième actionneur permettant de créer des couples non nuls autour de l'axe Z normal au plan (X, Y), est avantageux par rapport à l'art antérieur en ce qu'il permet comme cela est décrit ci-après d'obtenir très simplement d'une part la contrôlabilité de l'attitude du satellite suivant les trois axes (X, Y, Z) sans qu'il soit nécessaire de modifier la vitesse de rotation des toupies des gyrodynes, et d'autre part la mise en oeuvre aisée de manoeuvres de basculement rapide de l'axe Z, en appliquant avantageusement les techniques de guidage en mode manoeuvre proposées dans le brevet FR 2 786 283 de la Demanderesse, tout cela avec une grande facilité de dimensionnement du système de contrôle, en particulier en ce qui concerne la gestion des couplages entre les axes (X, Y, Z) et le dimensionnement des actionneurs qui en résulte.

D'autres avantages et caractéristiques de l'invention ressortiront de la description donnée ci-dessous, à titre non limitatif, en référence aux dessins annexés sur lesquels :

- La figure 1, décrite ci-dessus, est une représentation schématique de la disposition de deux gyrodynes, représentés par les orientations des axes cardan et des vecteurs moment cinétique des gyrodynes d'un système de contrôle d'attitude selon l'état de la technique;

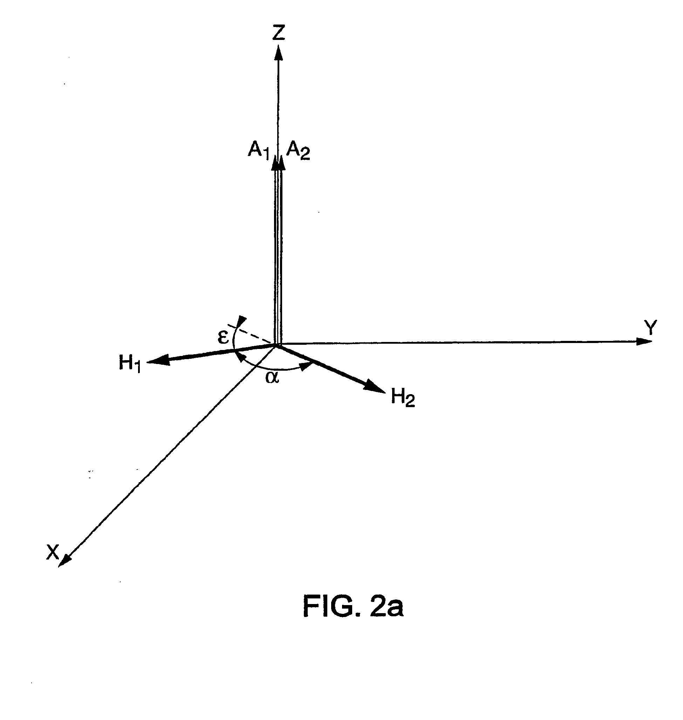

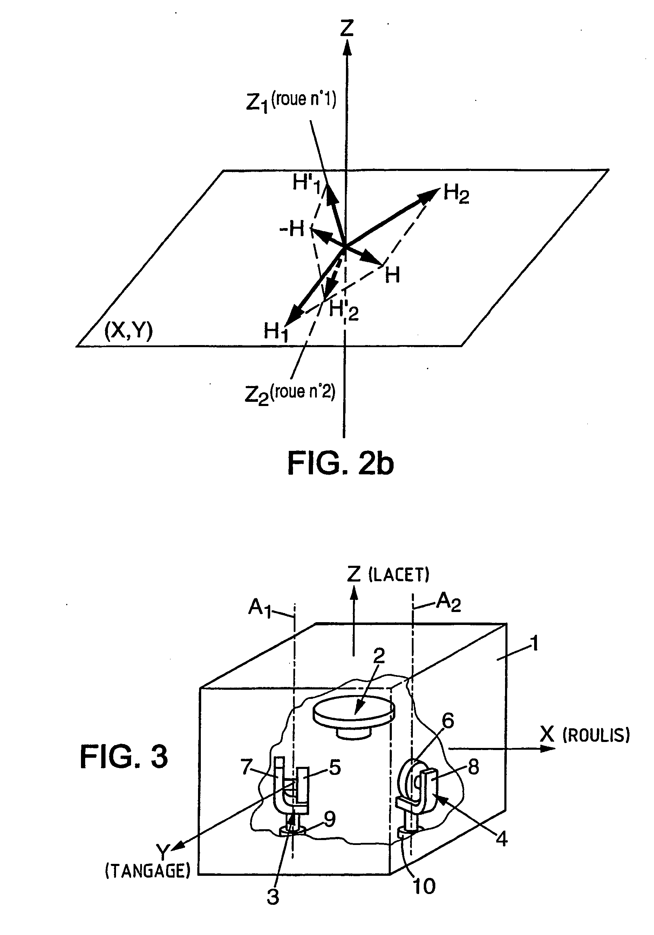

- les figures 2a et 2b représentent, de manière analogue à la figure 1, les orientations des axes cardan et vecteurs moment cinétique des deux gyrodynes du système de contrôle d'attitude selon l'invention, respectivement dans une configuration de principe, dans laquelle un troisième actionneur principal est avantageusement une roue de réaction d'axe Z, et dans une configuration redondante dans laquelle le troisième actionneur principal comprend deux roues de réaction dont les axes de rotation $Z_1$ et $Z_2$ sont biaisés par rapport à l'axe Z,
- la figure 3 est une représentation schématique des trois actionneurs principaux, dont deux gyrodynes et une roue de réaction, d'un système de contrôle d'attitude de satellite selon l'invention,

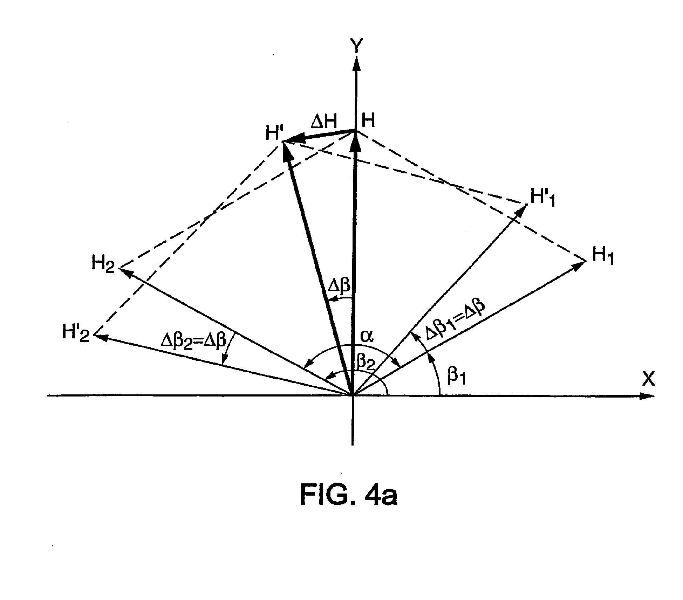

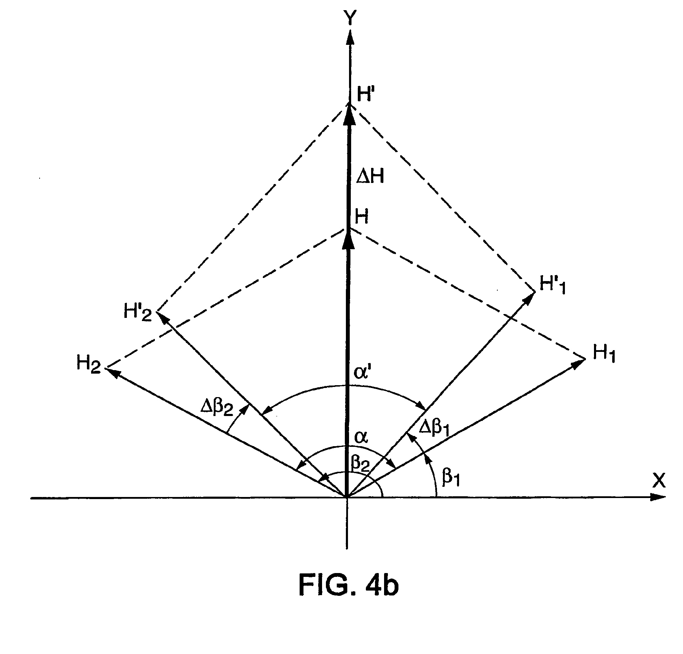

- les figures 4a et 4b sont des représentations schématiques, dans le plan (X, Y) dans lequel évoluent les vecteurs moment cinétique des deux gyrodynes du système de contrôles d'attitude selon l'invention, de l'effet, sur le vecteur moment cinétique total $\vec{H}$, respectivement d'une variation d'un même petit angle des angles d'orientation des vecteurs moment cinétique des deux gyrodynes, et de variations selon des petits angles opposés des deux mêmes vecteurs moment cinétique,

Pour mettre en oeuvre le procédé de contrôle d'attitude d'un satellite selon l'invention, une réalisation possible, mais non unique, du système de contrôle est la suivante. Le système de contrôle d'attitude du satellite comprend, selon l'invention:

- comme actionneurs principaux, deux gyrodynes dont les axes cardan sont parallèles entre eux et typiquement à l'axe Z, leurs moments cinétiques $\vec{H}_1$ et $\vec{H}_2$ pouvant être orientés indépendamment dans toutes les directions du plan (X, Y), comme représenté sur la figure 2a, ainsi qu'un troisième actionneur, avantageusement au moins une roue de réaction, utilisé en complément pour délivrer des couples, dans les deux sens, hors du plan des moments cinétiques des gyrodynes (par exemple suivant les directions +Z et -Z), cet autre actionneur étant dénommé actionneur principal suivant Z dans la suite de la description. La figure 3 représente schématiquement un tel exemple de trois actionneurs principaux.

Dans la réalisation représentée sur la figure 3, d'un type notamment utilisable sur un satellite, dont la plateforme est schématiquement représentée en 1, l'actionneur principal suivant Z est une roue de réaction 2, à vitesse de rotation variable et pilotée autour de l'axe Z, par exemple l'axe de lacet du satellite, tandis que les deux gyrodynes 3 et 4 ont chacun une toupie, respectivement 5 et 6, entraînée en rotation, à une vitesse contrôlée, le plus souvent constante mais pouvant être pilotée variable, autour d'un axe de rotation, contenu dans le plan défini par les axes X de roulis et Y de tangage du satellite, chaque toupie 5 et 6 étant montée rotative sur un cardan respectivement 7 et 8 orientable, par un moteur électrique respectivement 9 et 10, autour d'un axe cardan $A_1$ ou $A_2$ respectivement qui est parallèle à l'axe Z de lacet. Ainsi, on comprend que les moments cinétiques $\vec{H}_1$, et $\vec{H}_2$ des gyrodynes 3 et 4 peuvent être orientés indépendamment, et éventuellement simultanément, dans toutes les directions du plan (X, Y) par la rotation des cardans 7 et/ou 8 autour de leur axe cardan $A_1$ ou $A_2$ respectif, tandis que la roue de réaction 2 délivre, complémentairement, des couples selon les directions +Z et -Z, en dehors du plan des moments cinétiques $\vec{H}_1$,

et $\vec{H}_2$ des gyrodynes 3 et 4.

- Comme actionneurs secondaires, le système comprend également un ensemble d'actionneurs comme, par exemple, des magnéto coupleurs, actionneurs de jets, ailerons réfléchissants orientables, ou tous autres actionneurs nécessairement utilisés à bord des satellites pour contrer les effets cumulatifs de couples perturbateurs externes toujours présents en orbite.

- Comme capteurs, le système comprend aussi un jeu de senseurs d'attitude externes ou inertiels permettant de reconstituer les angles d'attitude et les vitesses angulaires du satellite par rapport à une référence 3-axes (géocentrique ou inertielle ou autre), et mesurer ainsi les écarts entre ces attitudes et vitesses reconstituées et l'attitude et vitesse désirées du satellite suivant les trois axes, ainsi que des senseurs nécessaires aux asservissements des actionneurs principaux et secondaires (mesures de la vitesse de la roue 2, mesures des positions et vitesses de rotation des cardans 7 et 8 autour des axes cardan des gyrodynes 3 et 4, etc.)

- Comme moyens de calcul, le système comprend en outre tout type d'organes de calcul (microprocesseurs, calculateurs, DSP, ASIC, FPGA, microcontrôleurs, circuits électroniques, etc.), permettant de produire, sous forme numérique ou analogique, ou mixte numérique et analogique, des signaux représentatifs d'au moins les grandeurs suivantes : variables de consigne comme les angles d'attitude (ou le quaternion) du satellite, la vitesse angulaire du satellite, l'orientation inertielle d'un axe fixe en repère satellite, consignes nécessaires à la réalisation de manoeuvres d'orientation du satellite (trajectoire de consigne en attitude, vitesse, accélération angulaire, profils temporels des couples ou moments cinétiques nécessaires à la réalisation de la manoeuvre, etc), estimation de l'attitude et de la vitesse angulaire du satellite suivant les trois axes à partir des mesures des senseurs, ordres à envoyer aux actionneurs principaux et secondaires, etc.

Dans la phase d'initialisation du système, partant avantageusement d'une configuration où les moments cinétiques des deux gyrodynes sont égaux et opposés ($\alpha$ = 180 degrés), les actionneurs secondaires, et éventuellement le troisième actionneur principal 2 suivant l'axe Z lorsqu'il est biaisé et peut produire une composante de moment cinétique dans le plan (X, Y), sont mis en oeuvre, en parallèle ou séquentiellement, pour créer un moment cinétique dans au moins une direction du plan (X, Y) permettant d'amener, par contre-réaction, de façon simultanée ou séquentielle, la paire de gyrodynes 3 et 4 dans une configuration où l'angle $\alpha$ a une valeur suffisamment éloignée de 180 degrés sans toutefois être nulle, le moment cinétique total de la paire de gyrodynes étant ainsi non nul et opposé au moment cinétique créé par les actionneurs secondaires.

Le biais de moment cinétique ($\vec{H}_1 + \vec{H}_2=H$) de la paire de gyrodynes créé par $\alpha$ différent de 180 degrés peut être positionné avantageusement (mais non nécessairement) selon la normale au plan orbital du satellite, afin de limiter les transferts de moment cinétique entre les gyrodynes pendant la phase opérationnelle et pendant les basculements du satellite.

Pour la même raison, le biais de moment cinétique ($\vec{H}$) de la paire de gyrodynes créé par $\alpha$ différent de 180 degrés peut être avantageusement compensé par la projection dans le plan (X, Y) du moment cinétique cumulé pour cet effet par le troisième actionneur principal (figure 2b), de sorte que le moment cinétique total cumulé par les actionneurs est nul.

A titre d'illustration, une configuration redondante particulière à deux gyrodynes et un troisième actionneur principal constitué de deux roues de réaction mettant en oeuvre ce procédé est présentée sur la figure 2b, où Z1 et Z2 désignent les axes de rotation des deux roues de réaction, axes qui sont biaisés par rapport à Z, et $\vec{H}_1$, $\vec{H}_2$ sont les vecteurs moments cinétiques, produits par les deux roues de réaction, par pilotage de leur vitesse de rotation, de sorte à compenser le moment cinétique total $\vec{H}$ de la paire de gyrodynes.

D'où, si $\vec{H}_1 + \vec{H}_2 = \vec{H}$, alors $\vec{H'}_1 + \vec{H'}_2 = -\vec{H}$.

Une fois positionnée dans cette configuration où $\alpha$ est non nul et différent de 180 degrés, la paire de gyrodynes 3 et 4 peut être utilisée très simplement pour assurer la contrôlabilité du satellite selon les axes X et Y, sans avoir à faire varier la vitesse d'une des deux toupies 5 et 6.

En effet, comme représenté sur la figure 4a, si $\beta_1$ est l'angle entre $\vec{H}_1$ et l'axe X et $\beta_2$ l'angle entre $\vec{H}_2$ et l'axe X, en faisant varier $\beta_1$ et $\beta_2$ d'un même petit angle $\Delta\beta = \Delta\beta_1 = \Delta\beta_2$ pendant le temps $\Delta$T, $\alpha$ restant donc constant, l'effet obtenu est de faire tourner le moment cinétique total $\vec{H} = \vec{H}_1 + \vec{H}_2$ des deux gyrodynes 3 et 4 autour de l'axe Z, en créant ainsi un couple $\Delta$H/$\Delta$T normal à $\vec{H}$ (aux petits angles).

D'autre part, en faisant varier $\alpha$ (de $\alpha$ à $\alpha'$) tout en gardant fixe l'orientation de la bissectrice de l'angle des moments cinétiques $\vec{H}_1$ et $\vec{H}_2$ (qui deviennent $\vec{H'}_1$ et $\vec{H'}_2$ pour $\alpha'$), autrement dit en tournant les gyrodynes 3 et 4 de telle sorte que $\Delta\beta_1 = -\Delta\beta_2$, comme représenté sur la figure 4b, le moment cinétique total $\vec{H}=\vec{H}_1+\vec{H}_2$, qui devient $\vec{H'}=\vec{H'}_1+\vec{H'}_2$, varie en norme (de $\Delta$H), mais non pas en direction, créant ainsi un couple dans la direction de H ou de - H.

Au total, en faisant varier à la fois et indépendamment $\beta_1$ et $\beta_2$ d'une quantité adéquate $\Delta\beta_1$ et $\Delta\beta_2$, n'importe quel couple peut être créé très rapidement selon n'importe quelle direction dans le plan (X, Y), ce qui assure la contrôlabilité totale selon (X, Y), ainsi que son quasi-découplage avec le contrôle autour de l'axe Z aux petits angles et/ou faibles vitesses angulaires, assuré par l'actionneur principal selon Z.

De cette façon, le système de contrôle d'attitude du satellite utilise les actionneurs principaux (la paire de gyrodynes 3 et 4 et le troisième actionneur principal 2) comme moyen de contrôle nominal.

En mode pointage fin (aux petits angles), à partir d'écarts observés entre variables de consigne (attitude, vitesse angulaire, pointage d'un axe de référence, etc) et variables estimées, l'organe de calcul élabore des ordres à envoyer à ces actionneurs pour réaliser les couples nécessaires à la correction de ces écarts. Les ordres envoyés peuvent être de diverses natures, numérique ou analogique, et porter sur diverses variables physiques, comme par exemple le courant à injecter dans les moteurs tels que 9 et 10 des axes cardan et de la ou des roues telles que 2 et des toupies 5 et 6, la position absolue ou relative des cardans tels que 7 et 8 en rotation autour des axes cardans, la vitesse de rotation des cardan, la vitesse de rotation de la ou des roues 2 et toupies 5 et 6, etc. Leur effet aux petits angles est toujours de créer de petits couples autour des axes X, Y, Z permettant de stabiliser le satellite autour des variables de consigne.

Avantageusement, la variation des angles $\beta_1$ et $\beta_2$ est calculée et appliquée afin de réaliser seule et en totalité les asservissements désirés suivant les axes X et Y, et ce à partir des éléments de principe présentés précédemment, qu'un homme de l'art peut aisément utiliser pour définir les algorithmes précis à mette en oeuvre. L'actionneur principal suivant Z (par exemple la roue de réaction 2 de la figure 3) est utilisé pour réaliser seul et en totalité l'asservissement suivant l'axe Z, et ce d'une façon notoirement indépendante aux petits angles.

Le procédé de l'invention permet la mise en place d'une stratégie de désaturation du système. En effet, sous l'effet des couples perturbateurs externes agissant continûment et de façon cumulative, le moment cinétique total du système d'actionneurs principaux (gyrodynes 3 et 4 et roue 2) ne va pas cesser d'augmenter : le moment cinétique du troisième actionneur suivant l'axe Z (dans le cas d'au moins une roue de réaction 2) va avoir tendance à augmenter jusqu'à saturation, et la paire d'actionneurs gyroscopiques 3 et 4 aura tendance à s'aligner en position $\alpha = 0$, éventuellement en passant par la configuration non désirable $\alpha = 180$ degrés. Dans ce cas, le système devient incontrôlable. Il faut donc limiter les excursions de la vitesse de la roue 2 et la plage de variations de l'angle $\alpha$ dans des limites acceptables (plage angulaire spécifiée ne comprenant ni 0 ni 180 degrés pour $\alpha$) qui dépendent du dimensionnement précis du système. Pour réaliser effectivement cette désaturation, des actionneurs secondaires sont utilisés, soit en boucle ouverte, en estimant par exemple les couples perturbateurs orbitaux et en les compensant, soit en boucle fermée, soit en mixant ces deux solutions. A titre d'exemple, le système de contrôle envoie des ordres à ces actionneurs secondaires, qui ont pour effet de créer une variation de moment cinétique dans le même sens que son augmentation observée, tout en maintenant bien sûr les consignes d'attitude à leur valeur nominale. En réaction à ces effets, le système d'actionneurs principaux 2, 3 et 4 ne peut qu'alléger son propre moment cinétique accumulé, ce qui éloigne les actionneurs (gyrodynes 3 et 4 et troisième actionneur 2) de leur zone de saturation.

A partir d'une configuration initiale des gyrodynes 3 et 4, dans laquelle $\alpha$ peut être proche de 180 degrés, les manoeuvres aux grands angles sont réalisées avantageusement en mettant en oeuvre un procédé analogue à celui décrit dans FR 2786 283, auquel on se référera pour toutes précisions à ce sujet, et qui est incorporé dans le présent mémoire descriptif par voie de référence.

Afin de réaliser des manoeuvres de basculement rapide, le procédé comprend avantageusement les étapes suivantes selon lesquelles :

- on détermine, à partir de conditions initiales et finales du satellite en termes d'angles d'attitude, vitesse angulaire et temps, une configuration de consigne de la paire de gyrodynes, éloignée des configurations singulières, c'est-à-dire des configurations pour lesquelles l'angle ($\alpha$) est nul ou égal à 180 degrés, et possiblement un profil temporel de moment cinétique suivant l'axe Z devant être réalisé par le troisième actionneur principal suivant l'axe Z, de telle sorte que l'échange de moment cinétique, pendant une durée impartie, entre le satellite, les deux gyrodynes amenés dans ladite configuration de consigne, et le troisième actionneur suivant l'axe Z provoque la manoeuvre d'attitude désirée, et

- on amène de façon simultanée, et possiblement indépendante, l'orientation du cardan de chacun des gyrodynes dans son orientation dans la configuration de consigne, grâce à une consigne de position angulaire envoyée en boucle ouverte dans un asservissement local en position angulaire des cardans, et

- on réalise de façon simultanée et possiblement indépendante le profil de moment cinétique suivant l'axe Z en utilisant le troisième actionneur principal suivant l'axe Z, avantageusement au moins une roue de réaction dont on fera varier la vitesse de rotation en conséquence.

Dans ce procédé, la ré-orientation des gyrodynes dans leur configuration de consigne se fera avantageusement de façon très rapide, et pourra de ce fait passer transitoirement par des positions singulières ($\alpha=0$ ou 180 degrés) sans que cela soit préjudiciable à la bonne tenue du contrôle d'attitude.

La configuration de consigne des gyrodynes étant choisie non singulière, le système reste contrôlable dans cette configuration, de sorte qu'avantageusement, à partir d'écarts observés dans la réalisation du profil de manoeuvre par rapport à un profil de consigne prédéfini, on ajoute des commandes en boucle fermée aux consignes en boucle ouverte envoyées aux actionneurs principaux afin de réduire lesdits écarts.

L'éloignement de la configuration de consigne aux singularités sera choisi en fonction des réserves de contrôlabilité que le concepteur souhaitera avoir pour réaliser le contrôle boucle fermée durant la manoeuvre. Pour une manoeuvre de basculement donné, il sera toujours possible d'augmenter cet éloignement en limitant par exemple la vitesse maximum de basculement.

Dans ce mode manoeuvre, le ralliement de la paire de gyrodyne à sa configuration de consigne se fait avantageusement de la façon la plus rapide possible (les seules limitations étant la capacité des moteurs des axes cardan des gyrodynes et la rigidité desdits gyrodynes), afin d'optimiser la durée de la manoeuvre ainsi que sa réalisation.

Dans ce procédé, la ré-orientation rapide de la paire de gyrodynes dans sa configuration de consigne assure l'essentiel du basculement du satellite. L'actionneur suivant Z est utilisé simplement pour gérer au cours de la manoeuvre le transfert du moment cinétique initial (à t = $t_0$) $\vec{H}^0 = \vec{H}^0_1 + \vec{H}^0_2$ de la paire de gyrodynes (dû au biais entre lesdits gyrodynes) depuis le plan (X, Y) vers l'axe Z, en totalité ou en partie selon la manoeuvre, de sorte que ce moment cinétique $\vec{H}^0$ reste inertiel. La manoeuvre étant connue, il est aisé de réduire le profil temporel du transfert de moment cinétique à réaliser avec l'actionneur principal suivant l'axe Z, de sorte que les couplages entre les axes X, Y et Z sont très faciles à gérer selon notre procédé.

Le procédé et le système de contrôle d'attitude 3 axes, selon l'invention permettent ainsi, en minimisant le nombre d'actionneurs principaux de type gyrodyne et donc en permettant des gains importants en masse, puissance, volume, et coûts, de contrôler des satellites pour lesquels une agilité est requise essentiellement suivant deux axes.

**Revendications**

1.  Procédé de contrôle de l'attitude d'un satellite équipé d'un système de contrôle d'attitude dans un trièdre (X, Y, Z) de référence de positionnement du satellite, ledit système de contrôle d'attitude comprenant :

    - au moins trois actionneurs dits principaux, dont deux sont des gyrodynes (3,4) ayant chacun une toupie entraînée en rotation autour d'un axe de rotation fixé sur un cardan orientable autour d'un axe cardan perpendiculaire à l'axe de rotation de la toupie correspondante et fixe par rapport au satellite, et
    - au moins un troisième actionneur principal (2), délivrant des couples dans les deux sens dans au moins une direction située hors du plan (X, Y), de sorte que ce troisième actionneur principal (2) est dit actionneur principal suivant l'axe (Z), le procédé comportant les étapes suivantes-:

    - on fixe les axes cardan des deux gyrodynes (3,4) de sorte que ces axes cardans sont parallèles l'un à l'autre et à l'axe (Z), les vecteurs moments cinétiques ($\vec{H}_1$, $\vec{H}_2$) des gyrodynes (3,4) évoluant dans le plan (X, Y), et formant entre eux un angle ($\alpha$) qui par définition correspond à un biais $\varepsilon = 180$
    - a entre les vecteurs moments cinétiques ($\vec{H}_1$, $\vec{H}_2$) lorsque $\alpha$ est différent de 0 et 180 degrés;
    - on imprime un biais ($\varepsilon$) non nul entre les vecteurs moments cinétiques ($\vec{H}_1$, $\vec{H}_2$) des gyrodynes (3,4),
    - on estime, à partir de mesures fournies par des senseurs utilisés à bord du satellite, les variables cinématiques et dynamiques, qui sont nécessaires pour le contrôle d'attitude du satellite, comme par exemple les angles d'attitude et vitesses angulaires du satellite suivant les trois axes,
    - on calcule des variables de consigne, destinées à permettre de réaliser des objectifs assignés au système de contrôle d'attitude du satellite, comme par exemple des basculements et pointages selon l'un au moins des trois axes du trièdre (X, Y, Z);
    - à partir d'écarts entre lesdites variables estimées et lesdites variables de consigne, on calcule, puis on envoie aux actionneurs principaux (3,4) des ordres de commandes, destinés à contrôler l'évolution desdits écarts dans le temps, lesdits ordres de commande transmis aux gyrodynes (3,4) comprenant au moins des ordres destinés à faire varier l'orientation de leurs axes cardan, comme par exemple des consignes de position angulaire des cardans devant être réalisées par un asservissement local en position, ou des consignes en courant électrique devant être injecté dans des moteurs d'orientation des axes cardan ;

**caractérisé en ce que**, lors d'une phase d'initialisation du système de contrôle d'attitude, l'angle ($\alpha$) entre les vecteurs moments cinétiques ($\vec{H}_1$, $\vec{H}_2$) des deux gyrodynes (3,4) est amené à une valeur sensiblement différente de 180 degrés, en utilisant au moins un actionneur secondaire, embarqué sur le satellite en vue de modifier sensiblement et de façon cumulative le moment cinétique dudit satellite dans au moins une direction du plan (X, Y), et/ou éventuellement l'actionneur principal suivant l'axe Z dans le cas où celui-ci permet d'engendrer une composante de moment cinétique dans le plan (X, V).

**2.** Procédé de contrôle selon la revendication 1 2, **caractérisé en ce qu'**on utilise,
comme actionneur secondaire, l'un au moins des organes suivants: magnéto-coupleurs, actionneurs à jet, actionneurs en couple de tout autre type, de préférence sélectionnés parmi ceux desdits organes précités, nécessairement utilisés à bord du satellite pour réaliser d'autres opérations que le mode normal d'opération du satellite.

**3.** Procédé de contrôle d'attitude selon la revendications 2, **caractérisé en ce qu'**au moins un actionneur est utilisé pour engendrer des couples suivant un, deux ou trois axes du trièdre da référence, dont l'effet conjoint avec le système de contrôle d'attitude du satellite est, simultanément ou séquentiellement, de modifier l'angle ($\alpha$) entre les vecteurs moment cinétiques ($\vec{H}_1$, $\vec{H}_2$) des gyrodynes (3,4) afin que ledit angle ($\alpha$) reste dans une plage spécifiée, et/ou que, simultanément ou séquentiellement, ledit actionneur principal selon l'axe (Z) puisse également être désaturé, notamment lorsque ledit actionneur principal selon l'axe (Z) comprend au moins une roue de réaction dont le moment cinétique doit rester en module inférieur à une limite donnée.

**4.** Procédé de contrôle selon l'une quelconque des revendications 1 à 3, **caractérisé en ce qu'**on oriente le moment cinétique total des deux gyrodynes (3,4), résultant du biais entre les vecteurs moment cinétique ($\vec{H}_1$, $\vec{H}_2$) desdits gyrodynes (3,4), dans une direction normale au plan orbital du satellite.

**5.** . Procédé de contrôle selon l'une quelconque des revendications 1 à 5, **caractérisé en ce qu'**on compense le moment cinétique total de la paire de gyrodynes (3,4), résultant du biais entre les vecteurs moment cinétiques ($\vec{H}_1$, $\vec{H}_2$) des deux gyrodynes (3,4), par la projection dans le plan (X, Y) du moment spécifique cumulé pour cet effet par ledit actionneur principal suivant le troisième axe (Z).

**6.** Procédé de contrôle selon l'une quelconques des revendications 1 à 5, **caractérisé en ce que**:

- on détermine, à partir de conditions initiales et finales du satellite en termes d'angles d'attitude, vitesse angulaire et temps, une configuration de consigne de la paire de gyrodynes (3,4), éloignée des configurations singulières pour lesquelles l'angle ($\alpha$) est nul ou égal à 180 degrés, et possiblement un profil temporel de moment cinétique suivant l'axe Z devant être réalisé par le troisième actionneur principal suivant l'axe Z, de telle sorte que l'échange de moment cinétique, pendant une durée impartie, entre le satellite, les deux gyrodynes (3,4) amenés dans ladite configuration de consigne, et le troisième actionneur suivant l'axe Z, provoque la manoeuvre d'attitude désirée, et
- on amène de façon simultanée, et possiblement indépendante, l'orientation du cardan de chacun des gyrodynes (3,4) dans son orientation de consigne, grâce à une consigne de position angulaire envoyée en boucle ouverte dans un asservissement local en position angulaire des cardans, et
- on réalise de façon simultanée et possiblement indépendante le profil de moment cinétique suivant l'axe Z en utilisant le troisième actionneur principal suivant l'axe Z, avantageusement au moins une roue de réaction dont on fera varier la vitesse de rotation en conséquence.

**7.** Procédé de contrôle selon la revendication 6 **caractérisé en ce que**, à partir d'écarts observés dans la réalisation d'un profil de manoeuvre par rapport à un profil de consigne prédéfini, on ajoute des commandes en boucle fermée aux consignes en boucle ouverte envoyées aux actionneurs principaux afin de réduire lesdits écarts. ledit biais ($\varepsilon$) étant choisi de préférence assez petit pour ne pas créer un moment cinétique interne trop important à bord du satellite, et assez grand pour assurer la contrôlabilité du système de contrôle d'attitude suivant les trois axes du trièdre (X, Y, Z) sans avoir nécessairement à modifier la vitesse de rotation de la toupie de l'un au moins des gyrodynes (3,4),

**8.** Procédé de contrôle selon la revendication 1, **caractérisé en ce qu'**il est mis en oeuvre uniquement par les deux gyrodynes (3, 4) et troisième actionneur principal suivant l'axe (Z) ; lesdites deux gyrodynes (3,4) étant dans une configuration particulière où les moments cinétiques ($\vec{H}_1$, $\vec{H}_2$) générés par ces gyrodynes (3,4) évoluent dans un plan (X, Y) du trièdre (X, Y, Z) avec un angle $\alpha$ non nul autour d'une position avec un biais $\varepsilon$ = 180 - a non nul, le troisième actionneur principal permettant de créer des couples non nuls autour de l'axe Z normal audit plan (X, Y).

**Claims**

**1.** A method for controlling the attitude of a satellite equipped with an attitude control system in a reference coordinate system (X, Y, Z) for positioning the satellite, and comprising :

- at least three actuators called main actuators, two of which are control moment gyros each having a rotor driven so as to rotate about a fixed rotation axis with respect to a steerable gimbal that can be oriented about a gimbal axis perpendicular to the rotation axis of the corresponding rotor, and stationary with respect to the satellite,
- at least a third main actuator delivering torques in both senses in at least one direction flot lying in the (X, Y) plane, so that this third main actuator is called the Z-axis main actuator; the method comprising the following steps :

- the gimbal axes of the two control moment gyros are fixed so that these gimbal axes are parallel to each other and to the Z axis, the angular momentum vectors $(\,(\,\vec{\vec{H}}_1, \vec{H}_2\,)\,)$ gyros therefore moving in the (X, Y) plane and making between them an angle ($\alpha$) which, by definition, corresponds to a skew $\varepsilon$ = 180 - a between the angular momentum *vectors* $(\vec{\vec{H}}_1, \vec{H}_2)$ when $\alpha$ is different from 0˚ and 180˚;
- a nonzero skew angle ($\varepsilon$) between the angular momentum vectors $(\vec{\vec{H}}_1, \vec{H}_2)$ of the control moment gyros is imparted,
- the kinematic and dynamic variables, which are necessary for controlling the attitude of the satellite, such as for example the attitude angles and angular velocities of the satellite along the three axes, are estimated from measurements provided by sensors used on board the satellite;
- setpoint variables, intended to allow objectives assigned to the satellite attitude control system to be achieved, such as for example the tilting and pointing along at least one of the three axes of the (X, Y, Z) coordinate system, are calculated; and
- control commands are calculated, from differences between said estimated variables and said setpoint variables, and then sent to the main actuators, these control commands being intended to control the change in said differences over time, said control commands transmitted to the control moment gyros comprising at least commands intended to vary the orientation of their gimbal axes, such as for example gimbal angular position setpoints that have to be generated by a local position feedback control, or electric current setpoints, for currents that have to be injected into motors for orienting the gimbal axes, **characterized in that** said skew angle (s) preferably being chosen to be small enough not to create an excessively large internal angular momentum on board the satellite but large enough to ensure controllability of the attitude control system along the three axes (X, Y, Z) without necessarily having to modify the rotation speed of the rotor of at least one of the control moment gyros and **in that**, during an initialization phase of the attitude control system, the angle ($\alpha$) between the angular momentum vectors $(\vec{\vec{H}}_1, \vec{H}_2)$ of the two control moment gyros is brought to a value substantially different from 180˚, using at least one secondary actuator on board the satellite, for the purpose of substantially and cumulatively modifying the angular momentum of said satellite in at least one direction in the (X, Y) plane and/or optionally the Z-axis main actuator in the case in which the latter is used to generate an angular momentum component in the (X, Y) plane.

2. The control method as claimed in claim 1, **characterized in that** at least one of the following members is used as secondary actuator: magnetic-torquers, jet actuators, torque actuators of any other type, these preferably being selected from those of said aforementioned members necessarily used on board the satellite for carrying out operations other than the normal mode of operation of the satellite.

3. The attitude control method as claimed in claim 2, **characterized in that** at least one actuator is used to generate torques along one, two or three axes of the reference coordinate system, the effect of which together with the satellite attitude control system is, simultaneously or sequentially, to modify the angle ($\alpha$) between the angular momentum vectors $(\vec{\vec{H}}_1, \vec{H}_2)$ of the control moment gyros so that said angle ($\alpha$) remains within a specified range, and/or **in that**, simultaneously, or sequentially, said Z-axis main actuator can also be desaturated, especially when said Z-axis main actuator comprises at least one reaction wheel whose angular momentum must remain, in terms of modulus, below a given limit.

4. The control method as claimed in any one of claims 1 to 3, **characterized in that** the total angular momentum of the two control moment gyros, resulting from the skew between the angular momentum vectors $(\vec{\vec{H}}_1, \vec{H}_2)$ *of* said control moment gyros, is oriented in a direction normal to the orbital plane of the satellite.

**5.** The control method as claimed in any one of claims 1 to 4, **characterized in that** the total angular momentum of the pair of control moment gyros, resulting from the skew between the angular momentum vectors $(\vec{H}_1, \vec{H}_2)$) of the two control moment gyros is compensated for by the projection in the (X, Y) plane of the cumulative specific moment to this effect by said third, Z-axis main actuator.

**6.** The control method as claimed in any one of claims 1 to 5, **characterized in that**:

- a setpoint configuration for the pair of control moment gyros, away from the singular configurations for which the angle ($\alpha$) is zero or equal to 180°' and possibly a temporal Z-axis angular momentum profile that has to be performed by the third, Z-axis main actuator are determined from the initial and final conditions of the satellite in terms of attitude angles, angular velocity and time, in such a way that the angular momentum exchange, over an imposed time, between the satellite, the two control moment gyros brought into said setpoint configuration and the Z-axis third actuator, brings about the desired attitude maneuver; and
- the orientation of the gimbal of each of the control moment gyros is brought, simultaneously and possibly independently, into its setpoint orientation thanks to an angular position setpoint sent, in open loop, into a local servocontrol for controlling the angular position of the gimbals; and
- the Z-axis angular momentum profile is generated, simultaneously and possibly independently, using the third, Z-axis main actuator, advantageously at least one reaction wheel, the rotation speed of which will consequently be varied.

**7.** The control method as claimed in claim 6, **characterized in that**, on the basis of differences observed in the generation of a maneuver profile with respect to a predefined setpoint profile, closed-loop commands are added to the open-loop setpoints sent to the main actuators so as to reduce said differences.

**8.** The control method as claimed in claim 1, **characterized in that** the method is implemented solely by the two control moment gyros (3,4) and the third main actuator along the Z-axis ; said control moment gyros (3, 4) being in a particular configuration in which the angular momentum vectors $(\vec{H}_1, \vec{H}_2)$ generated by the control moment gyros change in a (X, Y) plane of the reference coordinate system (X, Y, Z) with a nonzero angle ($\alpha$) about a position with a nonzero skew angle $\varepsilon = 180 - a$, the third main actuator creating nonzero torques about the Z-axis normal to the (X, Y) plane.

**Patentansprüche**

**1.** Steuer-/Regelverfahren für die Stellung eines Satelliten, ausgestattet mit einem Steuer-/Regelsystem für die Stellung in einem Referenz-Koordinatensystem (X, Y, Z) für die Positionierung des Satelliten, wobei das Steuer-/Regelsystem für die Stellung umfasst:

- wenigstens drei als Haupt-Aktuatoren bezeichnete Aktuatoren, von welchen zwei Kreiselinstrumente (3, 4) sind, von welchen jedes einen Kreisel aufweist, der zur Rotation um eine Rotationsachse angetrieben wird, welche auf einem Kardan fixiert ist, der um eine Kardan-Achse orientierbar ist, welche senkrecht zur Rotationsachse des entsprechenden Kreisels verläuft und in Bezug zu dem Satelliten fest ist, und
- wenigstens einen dritten Haupt-Aktuator (2), welcher Momente beidsinnig in wenigstens einer Richtung liefert, die außerhalb der Ebene (X, Y) liegt, so dass der dritte Haupt-Aktuator (2) Haupt-Aktuator für die Achse (Z) genannt wird, wobei das Verfahren die folgenden Schritte umfasst:

- die Kardan-Achsen der zwei Kreiselinstrumente (3, 4) werden so fixiert, dass die Kardan-Achsen zueinander und zu der Achse (Z) parallel sind, wobei die Drehimpuls-Vektoren $(\vec{H}_1, \vec{H}_2)$ der Kreiselinstrumente (3, 4) sich in der Ebene (X, Y) bewegen und zwischen sich einen Winkel ($\alpha$) bilden, der per Definition einer Schräge $\varepsilon = 180 - a$ zwischen den Drehimpulsvektoren $(\vec{H}_1, \vec{H}_2)$ entspricht, wenn $\alpha$ verschieden von 0 und 180 Grad ist,
- eine von Null verschiedene Schräge ($\varepsilon$) wird zwischen den Drehimpulsvektoren $(\vec{H}_1, \vec{H}_2)$ der Kreiselinstrumente (3, 4) aufgeprägt,
- ausgehend von Messungen, welche von an Bord des Satelliten verwendeten Sensoren geliefert werden, werden die kinematischen und dynamischen Variablen abgeschätzt, welche für die Steuerung/Regelung der Stellung des Satelliten notwendig sind, wie beispielsweise die Winkel der Stellung und Winkelgeschwindigkeiten des Satelliten gemäß den drei Achsen,
- Sollwertvariablen werden berechnet, die dazu bestimmt sind, Ziele zu erreichen, die dem Steuer-/Regelsystem für die Stellung des Satelliten zugeordnet sind, wie beispielsweise Verkippungen und Ausrichtungen gemäß wenigstens einer der drei Achsen des Koordinatensystems (X, Y, Z),

- ausgehend von Abweichungen zwischen den geschätzten Variablen und den Sollwertvariablen werden Steuer-/Regelbefehle, die dazu bestimmt sind, die zeitliche Entwicklung dieser Abweichungen zu steuern/ regeln, berechnet und dann an die Haupt-Aktuatoren (3, 4) gesendet, wobei die Steuer-/Regelbefehle, welche an die Kreiselinstrumente (3, 4) übertragen werden, wenigstens Befehle umfassen, die dazu bestimmt sind, die Orientierung von deren Kardan-Achsen zu verändern, wie beispielsweise Anweisungen bezüglich der Winkelposition der Kardans, welche durch eine lokale Positionsregelung umgesetzt werden müssen, oder Anweisungen in Form von elektrischem Strom, die in die Motoren zur Orientierung der Kardan-Achsen eingegeben werden müssen,

**dadurch gekennzeichnet, dass** die aufgeprägte Schräge ($\epsilon$) bevorzugt klein genug ausgebildet ist, damit sie nicht einen zu großen internen Drehimpuls an Bord des Satelliten erzeugt, und groß genug, um die Steuer-/Regelbarkeit des Steuer-/Regelsystems für die Stellung gemäß den drei Achsen des Koordinatensystems (X, Y, Z) sicherzustellen, ohne zwangsläufig die Rotationsgeschwindigkeit des Kreisels von dem wenigstens einen der Kreiselinstrumente (3, 4) modifizieren zu müssen, und dass bei einer Initialisierungsphase des Steuer-/Regelsystems für die Stellung der Winkel ($\alpha$) zwischen den Drehimpulsvektoren $(\vec{H}_1, \vec{H}_2)$ der zwei Kreiselinstrumente (3, 4) auf einen Wert gebracht wird, der deutlich von 180 Grad verschieden ist, unter Verwendung von wenigstens einem sekundären Aktuator, der sich an Bord des Satelliten befindet, im Hinblick darauf, im Wesentlichen und in kumulativer Art und Weise den Drehimpuls des Satelliten in wenigstens einer Richtung der Ebene (X, Y) zu modifizieren, oder/und gegebenenfalls von dem Haupt-Aktuator für die Achse Z in dem Fall, wo dieses ermöglicht, eine Drehimpuls-Komponente in der Ebene (X, Y) zu erzeugen.

2. Steuer-/Regelverfahren nach Anspruch 1, **dadurch gekennzeichnet, dass** als sekundärer Aktuator wenigstens eines der folgenden Instrumente verwendet wird: Magnet-Drehmomentgeber, Strahl-Aktuatoren, Moment-Aktuatoren von jedem anderen Typ, bevorzugt ausgewählt aus denjenigen der vorerwähnten Instrumente, die notwendigerweise an Bord des Satelliten verwendet werden, um andere Tätigkeiten auszuführen als der normale Betriebsmodus des Satelliten.

3. Steuer-/Regelverfahren für die Stellung nach Anspruch 2, **dadurch gekennzeichnet, dass** wenigstens ein Aktuator verwendet wird, um Momente gemäß einer, zwei oder drei Achsen des Referenz-Koordinatensystems zu erzeugen, deren gemeinsamer Effekt mit dem Steuer-/Regelsystem für die Stellung des Satelliten darin besteht, simultan oder nacheinander den Winkel ($\alpha$) zwischen den Drehimpulsvektoren $(\vec{H}_1, \vec{H}_2)$ der Kreiselinstrumente (3, 4) zu modifizieren, so dass der Winkel ($\alpha$) in einem bestimmten Bereich bleibt, oder/und dass gleichzeitig oder nacheinander der Haupt-Aktuator für die Achse (Z) ebenfalls ungesättigt sein kann, insbesondere wenn der Haupt-Aktuator gemäß der Achse (Z) wenigstens ein Reaktionsrad umfasst, dessen Drehimpuls im Betrag kleiner als ein gegebener Grenzwert bleiben muss.

4. Steuer-/Regelverfahren nach einem der Ansprüche 1 bis 3, **dadurch gekennzeichnet, dass** der Gesamt-Drehimpuls der zwei Kreiselinstrumente (3, 4), der aus der Schräge zwischen den Drehimpulsvektoren $(\vec{H}_1, \vec{H}_2)$ der Kreiselinstrumente (3, 4) resultiert, in einer Richtung normal zur Orbitalebene des Satelliten orientiert wird.

5. Steuer-/Regelverfahren nach einem der Ansprüche 1 bis 4, **dadurch gekennzeichnet, dass** der Gesamt-Drehimpuls des Paars von Kreiselinstrumenten (3, 4), welcher aus der Schräge zwischen den Drehimpulsvektoren $(\vec{H}_1, \vec{H}_2)$ der zwei Kreiselinstrumente (3,4) resultiert, durch die Projektion auf die Ebene (X, Y) des spezifischen Moments kompensiert wird, das zu diesem Zweck durch den Haupt-Aktuator gemäß der dritten Achse (Z) kumuliert wird.

6. Steuer-/Regelverfahren nach einem der Ansprüche 1 bis 5, **dadurch gekennzeichnet, dass**:

- ausgehend von Anfangs- und Endbedingungen des Satelliten in Bezug auf Winkel der Stellung, Winkelgeschwindigkeit und Zeit eine Soll-Konfiguration des Paars von Kreiselinstrumenten (3, 4) bestimmt wird, welche entfernt ist von einzelnen Konfigurationen, für welche der Winkel ($\alpha$) Null oder gleich 180 Grad ist, und möglicherweise ein zeitliches Profil für den Drehimpuls gemäß der Achse Z, das durch den dritten Haupt-Aktuator für die Achse Z umgesetzt werden muss, so dass der Austausch von Drehimpuls zwischen dem Satelliten, den zwei in die Soll-Konfiguration gebrachten Kreiselinstrumenten (3, 4), und dem dritten Haupt-Aktuator für die Achse Z während einer zur Verfügung stehenden Dauer das gewünschte Stellungs-Manöver hervorruft und

- gleichzeitig und möglicherweise unabhängig die Orientierung des Kardans von jedem der Kreiselinstrumente (3, 4) in dessen Soll-Orientierung gebracht wird, dank eines Sollwerts für die Winkelposition, der in einer offenen Schleife in eine lokale Regelung der Winkelposition der Kardans eingegeben wird, und

- das Drehimpuls-Profil gemäß der Achse Z gleichzeitig und möglicherweise unabhängig umgesetzt wird, indem der dritte Haupt-Aktuator für die Achse Z verwendet wird, bevorzugt wenigstens ein Reaktionsrad, dessen Rotationsgeschwindigkeit folglich zum Variieren gebracht wird.

7. Steuer-/Regelverfahren nach Anspruch 6, **dadurch gekennzeichnet, dass**, ausgehend von beobachteten Abweichungen in der Umsetzung eines Manöver-Profils in Bezug auf ein vordefiniertes Sollprofil, Anweisungen in geschlossener Schleife den Anweisungen in offener Schleife hinzugefügt werden, welche an die Haupt-Aktuatoren gesendet werden, um die Abweichungen zu reduzieren.

8. Steuer-/Regelverfahren nach Anspruch 1, **dadurch gekennzeichnet dass** es ausschließlich durch die zwei Kreiselinstrumente (3, 4) und den dritten Haupt-Aktuator für die Achse (Z) umgesetzt wird, wobei die zwei Kreiselinstrumente (3, 4) sich in einer besonderen Konfiguration befinden, wobei die Drehimpulse $(\vec{H}_1, \vec{H}_2)$, welche durch die Kreiselinstrumente (3, 4) erzeugt werden, sich in einer Ebene (X, Y) des Koordinatensystems (X, Y, Z) bewegen, mit einem von Null verschiedenen Winkel $\alpha$ um eine Position mit einer von Null verschiedenen Schräge = 180 - a, wobei der dritte Haupt-Aktuator ermöglicht, von Null verschiedene Momente um die zu der Ebene (X, Y) normale Achse Z zu erzeugen.

FIG. 1

FIG. 2a

Z

Z₁ (roue n°1)

H'₁

H₂

-H

H

H'₂

(X,Y)

H₁

Z₂(roue n°2)

# FIG. 2b

Z (LACET)

A₁

A₂

1

2

X (ROULIS)

6

FIG. 3

7    5    8

4

9

Y
(TANGAGE)

3

10

FIG. 4a

FIG. 4b

**EP 1 680 648 B1**

## RÉFÉRENCES CITÉES DANS LA DESCRIPTION

**Documents brevets cités dans la description**

- US 5681012 A
- US 6360996 B
- US 6241194 B
- FR 2786283